Europäisches Patentamt

European Patent Office

Office européen des brevets

(19)

(11) **EP 0 279 421 B1**

(12) **EUROPEAN PATENT SPECIFICATION**

(45) Date of publication and mention
of the grant of the patent:
**02.05.1997 Bulletin 1997/18**

(51) Int Cl.6: **G06F 12/08**, G06F 11/00

(21) Application number: **88102288.3**

(22) Date of filing: **17.02.1988**

(54) **Cache memory control system**

Cachespeichersteuerungsanordnung

Système de commande d'antémémoire

(84) Designated Contracting States:
**DE FR GB**

(30) Priority: **18.02.1987 JP 33495/87**
**17.03.1987 JP 60207/87**

(43) Date of publication of application:
**24.08.1988 Bulletin 1988/34**

(60) Divisional application: **95102266.4**

(73) Proprietor: **NEC CORPORATION**
**Tokyo (JP)**

(72) Inventor: **Mori, Toshikatsu c/o NEC Corporation**
**Minato-ku Tokyo (JP)**

(74) Representative: **VOSSIUS & PARTNER**
**Postfach 86 07 67**
**81634 München (DE)**

(56) References cited:
**EP-A- 0 010 625**            **GB-A- 2 127 189**

• **ELEKTRONISCHE RECHENANLAGEN, vol. 24,**
**no. 4, August 1982, pages 157-175, Munich, DE;**
**R. MÄNNER et al.: "Entwurf und Realisation des**
**schnellen, flexiblen und fehlertoleranten**
**Polyprozessors "Heidelberger POLYP""**

## Description

The present invention relates to a cache memory control system.

Cache memories are small-capacity, high-speed buffer memories arranged between processors and main memories and are very popular in medium and high speed computer systems for effectively shortening main memory access time under the control of processors.

The principle of cache memories is described in detail in Computing Survey, Vol. 14, No. 3, PP. 473 - 530, 1982 and is based on an empirical rule wherein "locality" is present in main memory Access, i.e., referencing of a main memory address space by a program.

The above reference describes "Locality means that the loci of reference of the program in the near future are likely to be near the current loci of reference." By utilizing this property of locality, the contents of successive memory locations (to be referred to as a block) having a predetermined size and including a word currently accessed from the CPU to the main memory are fetched from the main memory to the cache memory. Only high-speed cache memory access is then required, and low-speed main memory access need not be performed.

Conventional cache memories have the following disadvantages.

Each entry of the cache memory consists of data, an address tag representing a data location in the main memory or a real address, and a valid bit representing validity of the data. Since the cache memory comprises a random access memory (RAM), valid bits of all entries must be cleared when the cache memory system is powered or the virtual address space is changed. A conventional cache memory system includes a controller which controls the clearing of the valid bits in accordance with a power-on signal or an instruction from the processor and acknowledges the end of clearing to the processor. The processor starts using the cache memory in response to a clear end acknowledgement signal from the controller. In this valid bit clear control system, the end of the clearing must be detected by the processor, and the processor determines whether the cache memory can be accessed, thus undesirably increasing the overhead of the processor.

The conventional cache memory has another disadvantage as follows.

Whenever a main memory in a conventional computer system is accessed, an error check must be performed in units of data. During data transfer from the main memory to the cache memory, the error check in units of data is applied. The data to be transferred include data which is not employed by the processor. Therefore, the above data check indicates that unnecessary error check is performed.

It is the object of the invention claimed in the divisional application EP-A-0 655 689 to provide a cache memory control system for decreasing the overhead during the operation of a cache memory under the control of a processor when a memory is powered or a virtual address space is changed.

### Summary of the Invention

It is the object of the present invention to provide a cache memory control system for preventing a processor from performing unnecessary error checking during data transfer from a main memory to a cache memory.

A cache memory control system according to the present invention is claimed in Claim 1.

### Brief Description of the Drawings

Fig. 1 is a block diagram of a cache memory control system;

Figs. 2(A) to 2(F) are timing charts showing waveforms of signals in the main parts in the circuit shown in Fig. 1;

Fig. 3 is a block diagram of a cache memory control system according to an embodiment of the present invention; and

Figs. 4(A) to 4(J) are timing charts showing waveforms of signals in the main parts in the circuit shown in Fig. 3.

### Detailed Description of the Preferred Embodiment

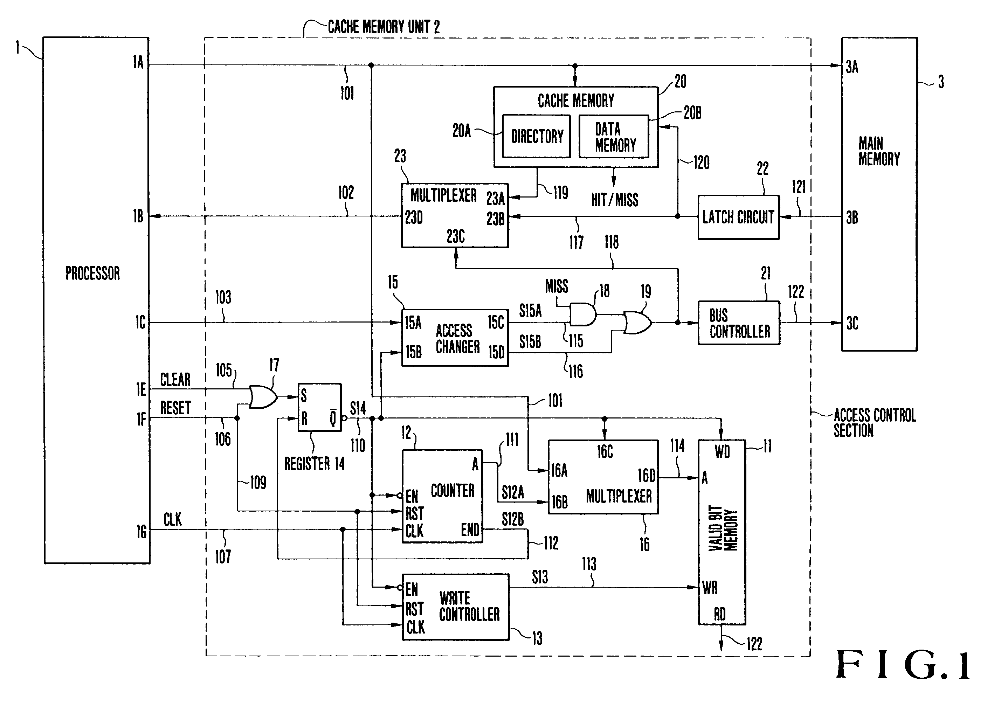

Fig. 1 shows a cache memory control system as claimed in the divisional application EP-A-0 655 689.

Referring to Fig. 1, a cache memory unit 2 including a cache memory 20 is connected between a processor 1 and a main memory 3. The cache memory 20 includes a directory 20A and a data memory 20B and is connected to an address bus 101 for connecting a terminal 1A of the processor 1 to a terminal 3A of the main memory 3. An output of the cache memory 20 is connected to a terminal 23A of a multiplexer 23 through a line 119.

A data bus 121 of the main memory 3 is connected to the input terminal of the cache memory 20 and an input terminal 23B of the multiplexer 23 through a latch circuit 22. The multiplexer 23 selects the signal input to the input terminal 23A or 23B in response to a control signal input to a control terminal 23C. The selected signal is output from an output terminal 23D to a data bus 102 of the processor 1.

An output terminal 1C for a signal representing access status of the processor 1 is connected to an input terminal 15A of an access changer 15 through a line 103. The access changer 15 activates the output signal from a terminal 15C or 15D in response to a control signal supplied to a control terminal 15B. The output terminal 15C of the access changer 15 is connected to one input terminal of an AND gate 18, and the output terminal 15D is connected to one input terminal of an OR gate 19. The other input terminal of the AND gate 18 receives a signal MISS representing that data requested by the processor 1 is not stored in the cache memory 20. An output from the AND gate 18 is input to the other input terminal of the OR gate 19. An output from the OR gate 19 is input to the control terminal 23C of the multiplexer 23 through a line 118 and a bus controller 21. The bus controller 21 is connected to a control terminal 3C of the main memory 3 through a line 122.

Reference numeral 11 denotes a valid bit memory for storing valid bits; 12, a counter for counting addresses for data to be cleared in the valid bit memory 11; 13, a write controller for controlling write access of the valid bit memory 11; and 14, a register for maintaining a predetermined state during clearing. Although the valid bit memory 11 is part of the directory 20A in the cache memory 20, the memory 11 is separately shown for the illustrative convenience.

The address bus 101 of the processor 1 which outputs an address signal for the valid bit memory 11 is connected to one input terminal 16A of the multiplexer 16 through a line 104. The other input terminal 16B, a control terminal 16C, and an output terminal 16D of the multiplexer 16 are respectively connected to an output terminal A of the counter 12 through a line 111, an output terminal $\overline{Q}$ of the register 14 through a line 110, and an input terminal A of the valid bit memory 11 through a line 114. The multiplexer 16 selects the signal input to the input terminal 16A or 16B in response to a control signal S14 supplied to the control terminal 16C. The selected signal is output from the output terminal 16D. The control signal S14 output from the register 14 through the line 110 is also supplied to enable terminals EN of the counter 12 and the write controller 13 and to a control terminal WD of the valid bit memory 11.

A clear command signal CLEAR output from an output terminal 1E of the processor 1 and representing clearing of the valid bit memory 11 is input to one input terminal of an OR gate 17. A reset signal RESET output from an output terminal 1F of the processor 1 is input to the other input terminal of the OR gate 17 and to a reset terminal RST of the counter 12. The output terminal of the OR gate 17 is connected to a set terminal S of the register 14. A reset terminal R of the register 14 is connected to a terminal END of the counter 12 through a line 112. The terminal END outputs a signal S12B representing the end of counting of the counter 12.

An output terminal 1G for a clock signal CLK of the processor 1 is connected to clock terminals CLK of the counter 12 and the write controller 13 through a line 107.

An output signal S13 from the write controller 13 is supplied to a write terminal WR of the valid bit memory 11. A read terminal RD of the valid bit memory 11 is connected to a HIT/MISS signal generator (not shown) in the cache memory 20 through the line 122.

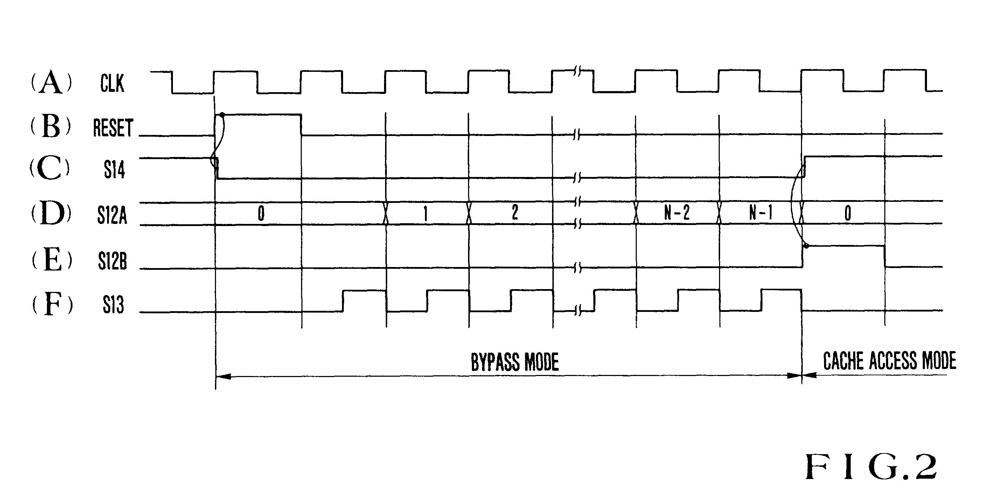

The operation of the circuit shown in Fig. 1 will be described with reference to Figs. 2(A) to 2(F) representing waveforms of signals in main parts in the circuit.

When the clear command CLEAR or the reset signal RESET is not output from the processor 1, the register 14 is maintained in the reset state, and its $\overline{Q}$ output signal S14 is set at high level ("H"). In this case, the cache access mode is set. In this mode, the write controller 13 is kept disabled. An address signal for the valid bit memory 11 is supplied from the terminal 1A of the processor 1 through the multiplexer 16. At the same time, the access changer 15 sets an output signal S15A at "H" level. However, if the signal MISS is not output, an output signal from the AND gate 18 is kept at low level ("L"). Therefore, an output from the OR gate 19 is kept at "L" level. The multiplexer 23 selects the output from the cache memory 20, and the selected signal is output onto the data bus 102 of the processor 1. During this operation, the bus controller 21 inhibits access of the main memory 3. When the signal MISS is generated in the cache access mode, an output from the AND gate 18 and hence an output from the OR gate 19 are sequentially set at "H" level. The multiplexer 23 selects an input at its input terminal 23B. At the same time, the bus controller 21 starts access of the main memory 3. The data from the main memory 3 is supplied onto a line 120 from the latch circuit 22 to update the contents of the cache memory 20.

When a signal HIT is delivered from the cache memory 20, the multiplexer 23 selects data output from the cache memory 20 through the line 119, and the selected data is output onto the processor data bus 102.

The cache bypass mode will be described below.

When the register 14 is set in response to the reset signal RESET or the clear command CLEAR from the processor 1, its $\overline{Q}$ output, i.e., a signal S14 which represents the clear period enables the counter 12 and the write controller 13. The respective operations of the counter 12 and the write controller 13 are started. An output S12A from the counter 12 is supplied as an address signal to the valid bit memory 11 through the multiplexer 16. A memory location addressed by the signal S12A is cleared by a signal S13 from the write controller 13. When the valid bit clearing is completed, the counter 12 outputs the clear end signal S12B. The register 14 is reset in response to the clear end signal S12B, and therefore the counter 12 and the write controller 13 are disabled.

When the output signal S14 from the register 14 is set active, the output terminal 15D of the access changer 15 is set active ("H"). An output from the OR gate 19 is set at "H" level, and the multiplexer 23 selects an input signal at its input terminal 23B. At the same time, the bus controller 21 outputs a control signal to the main memory 3, thereby starting access of the main memory 3.

The data read out from the main memory 3 is latched by the latch circuit 22 and is output onto the processor data bus 102 through a line 117 and the multiplexer 23.

As described above, during clearing of the valid bit memory 11, the mode of access of the cache memory 20 by the processor is automatically changed to the bypass mode at the cache memory unit 2 side or to the cache access mode at the end of clearing of the valid bit memory 11. Therefore, the processor 1 can access the cache memory 11 without detecting the end of clearing of the valid bits.

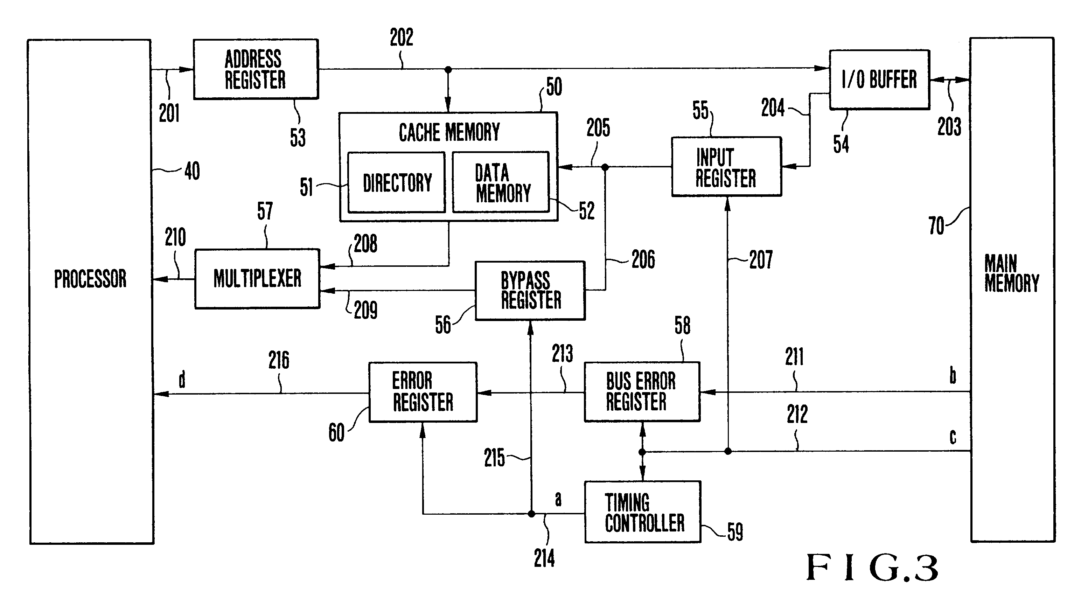

Fig. 3 is a block diagram of a cache memory control system according to the embodiment of the present invention. Referring to Fig. 3, reference numeral 40 denotes a processor; 50, a cache memory; and 70, a main memory. The cache memory 50 includes a directory 51 and a data memory 52.

An address bus 201 of the processor 40 is connected to the input terminal of an address register 53. The output terminal of the address register 53 is connected to the cache memory 50 and an I/O buffer 54 for time-divisionally controlling the inputs to or outputs from the main memory 70. The I/O buffer 54 is connected to the main memory 70 through a bidirectional bus 203 and time-divisionally gates the address signal supplied to the main memory 70 and data output from the main memory 70.

A data output from the I/O buffer 54 is input to and held by an input register 55. The input register 55 outputs the data to the cache memory 50 and a bypass register 56 in response to a control clock signal c input through a line 207. The bypass register 56 holds the input data and outputs the data to one input terminal of a multiplexer 57 through a line 209 in response to a timing control signal a supplied through a line 215. The other input terminal of the multiplexer 57 receives data supplied from the cache memory 50 through a line 208. The multiplexer 57 selects one of the two inputs, and the selected data is output to a data bus 210 of the processor 40.

The main memory 70 outputs a bus error signal b to a bus error register 58 through a line 211. The bus error signal b represents that a main memory bus error occurs. In response to the clock signal c, the bus error signal b is input to an error register 60 from the bus error signal register 58. The error register 60 holds the bus error signal b and supplies an error signal d to the processor 40 through a line 216 in response to the timing control signal a generated by a timing controller 59 on the basis of the clock signal c.

The timing control signal a from the timing controller 59 is also supplied to the bypass register 56 as a control signal.

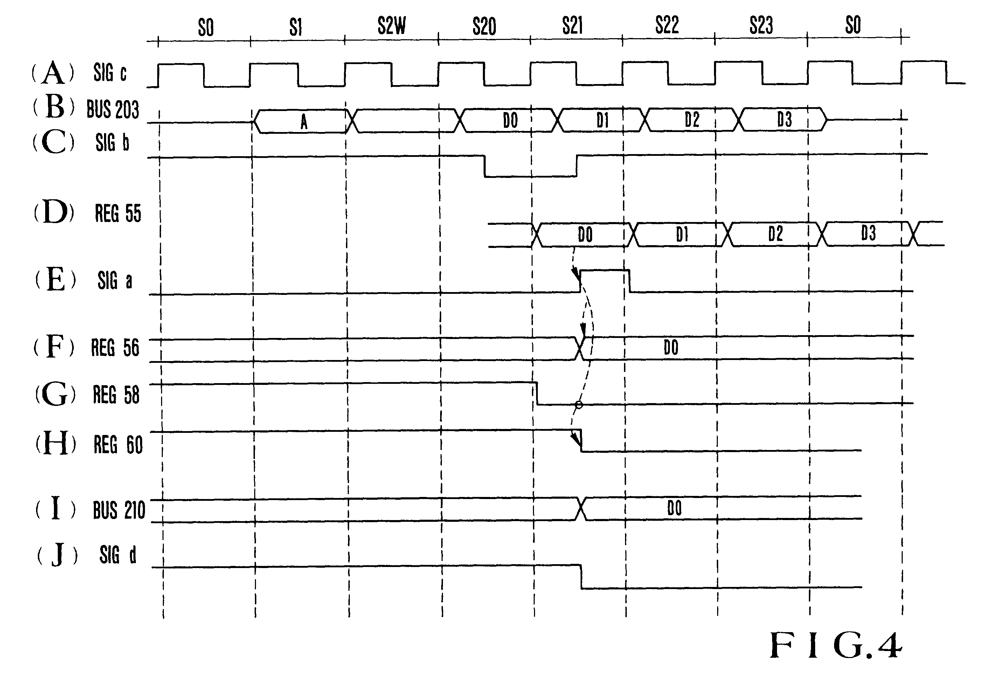

The operation of the cache memory control system shown in Fig. 3 will be described with reference to Figs. 4(A) to 4(J) representing waveforms of signals in the main parts of the circuit shown in Fig. 3.

In this embodiment, the address signal and the data signal during access of the main memory 70 time-divisionally use a single bus 203. The data read order during access of the main memory 70 is determined by a control scheme in which data accessed by the processor 40 is read out first, and then the remaining data is read out. When access of the cache memory 50 by the processor 40 is started, the address signal is applied to the address bus 201 and is latched by the address register 53. The directory 51 of the cache memory 50 is referenced on the basis of the address signal. If the addressed data is detected to be stored in the data memory 52, the data is output onto the data bus 210 of the processor 40 through the multiplexer 57. However, if the addressed data is detected not to be stored in the cache memory 50 as a result of referencing of the directory 51, the cache memory 50 accesses the main memory 70 to read out the desired blocks, that is, a main memory access starts.

In the main memory access, an address signal is output onto the bus 203 of the main memory 70 in the S1 state shown in Fig. 4(A). The next S2W state is a wait state and is inserted when data to be output from the main memory 70 is not yet prepared. The next S20 to S23 states are states for reading the data. The readout data (Fig. 4(B)) from the main memory 70 are sequentially latched by the input register 55 in response to clocks c, as shown in Fig. 4(D).

In this embodiment, each data block consists of 4 words D0 to D3. Main memory access is completed when 4-word data is latched. As previously described, the data accessed by the processor 40 is D0, and the remaining data are D1 to D3.

The contents of the input register 55 are input to the data memory 52 to update the data memory 52 and is also input to the bypass register 56, as shown in Fig. 4(F). The timing signal a input to the bypass register 56 is generated by the timing generator 59 in order to discriminate a transfer timing of the data D0 accessed by the processor 40. As shown in Fig. 4(E), the timing signal a is output for only the first readout data D0. The data D0 (Fig. 4(F)) latched by the bypass register 56 is output to the data bus 210 through the multiplexer 57.

The bus error signal b (Fig. 4(E)) representing a bus error during main memory access is latched by the bus error register 58 (Fig. 4(G)) and is held until the next main memory access cycle. An output signal from the bus error register 58 is input to and held by the error register 60 (Fig. 4(H)). The timing signal a input to the error register 60 is output for only the first readout data D0, as described above. Therefore, the error register 60 latches only the error information for the data D0 but does not latch the error information for the data D1 to D3. An output signal from the error register 60 is supplied to the processor 40 as the error signal d shown in Fig. 4(J).

In the above embodiment, a data bus required for data write access is omitted for illustrative convenience. A block including an error is not registered in the directory 51 in the cache memory 50. If the processor 40 accesses data in this block, a mishit occurs, and access of the main memory 70 is performed.

According to the present invention as described above, during data transfer between the cache memory 50 and the main memory 70, error information for only the data accessed by the processor 40 is supplied to the processor 40, and unnecessary error processing of the processor 40 can be eliminated.

## Claims

1. A cache memory control system comprising:

a small-capacity cache memory (50) arranged between a processor (40) and a main memory (70) to effectively shorten access time;
means for supplying error information (b) representing an error occurring during transfer of a block from said main memory (70) to said cache memory (50);
means (59) for outputting a timing signal (a) representing a transfer timing for access data requested by said processor (40), the access data ($D_0$) being included in blocks ($D_0$; $D_1$; ...) transferred from said main memory (70) to said cache memory (50); and
error information retaining means (60) for retaining the error information (b) when the error information is discriminated by the timing signal (a) such that the error information is associated with the access data ($D_0$), and for sending a discrimination result (d) to said processor (40).

## Patentansprüche

1. Cachespeichersteuerungs system mit:

einem Cachespeicher (50) kleiner Kapazität, der zwischen einem Prozessor (40) und einem Hauptspeicher (70) angeordnet ist, um die Zugriffszeit wirksam zu verkürzen;

einer Einrichtung zum Liefern einer Fehlerinformation (b), die einen während der Übertragung eines Blockes von dem Hauptspeicher (70) an den Cachespeicher (50) auftretenden Fehler repräsentiert;

einer Einrichtung (59) zum Ausgeben eines Zeittaktsignals (a), das einen Übertragungszeittakt für von dem Prozessor (40) angeforderte Zugriffsdaten darstellt, wobei

die Zugriffsdaten ($D_0$) in Blöcken ($D_0$; $D_1$; ...) enthalten sind, die von dem Hauptspeicher (70) an den Cachespeicher (50) übertragen werden;

einer Fehlerinformation-Aufbewahrungseinrichtung (60) zum Aufbewahren der Fehlerinformation (b), wenn die Fehlerinformation durch das Zeittaktsignal (a) so unterschieden wird, daß die Fehlerinformation den Zugriffsdaten ($D_0$) zugeordnet ist, und zum Senden eines Unterscheidungsergebnisses (d) an den Prozessor (40).

## Revendications

1. Système de commande d'antémémoire comportant :

une antémémoire (50) de petite capacité, agencée entre un processeur (40) et une mémoire centrale (70) pour réduire de manière efficace les temps d'accès,
des moyens pour délivrer des informations d'erreur (b) représentant une erreur apparaissant lors du transfert d'un bloc de ladite mémoire centrale (70) à ladite antémémoire (50),
des moyens (59) pour produire en sortie un signal de temporisation (a) représentant une temporisation du transfert des données d'accès demandées par ledit processeur (40), les données d'accès ($D_0$) étant contenues dans des blocs ($D_0$; $D_1$; ...) transférés de ladite mémoire centrale (70) à ladite antémémoire (50), et
des moyens de retenue d'informations d'erreur (60) pour retenir les informations d'erreur (b) lorsque les informations d'erreur sont discriminées au moment où est produit le signal de temporisation (a), de sorte que les informations d'erreur sont associées aux données d'accès ($D_0$), et pour envoyer un résultat de discrimination (d) vers ledit processeur (40).

FIG.1

(A) CLK

(B) RESET

(C) S14

(D) S12A $\quad$ 0 $\quad$ 1 $\quad$ 2 $\quad$ N-2 $\quad$ N-1 $\quad$ 0

(E) S12B

(F) S13

BYPASS MODE $\qquad$ CACHE ACCESS MODE

F I G.2

EP 0 279 421 B1

F I G. 3

FIG.4